(19) Europäisches Patentamt
European Patent Office
Office européen des brevets

(11) **EP 4 629 375 A1**

(12) **EUROPEAN PATENT APPLICATION**
published in accordance with Art. 153(4) EPC

(43) Date of publication:
08.10.2025 Bulletin 2025/41

(21) Application number: 23910288.2

(22) Date of filing: 20.12.2023

(51) International Patent Classification (IPC):
*H01M 10/052* (2010.01)  *H01M 10/058* (2010.01)
*B07C 5/344* (2006.01)

(52) Cooperative Patent Classification (CPC):
B07C 5/344; H01M 10/052; H01M 10/058;
Y02E 60/10; Y02P 70/50

(86) International application number:
PCT/CN2023/140132

(87) International publication number:
WO 2024/140358 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.12.2022  CN 202211736687
31.12.2022  CN 202211735155

(71) Applicant: D-Aus Energy Storage Technology
(Xi'an) Co., Ltd
Xi' An, Shaanxi 710075 (CN)

(72) Inventors:
• ZHENG, Gaofeng
  Shaanxi 710075 (CN)
• LI, Chao
  Shaanxi 710075 (CN)
• LEI, Zhengjun
  Shaanxi 710075 (CN)

(74) Representative: Novagraaf Technologies
Bâtiment O2
2, rue Sarah Bernhardt
CS90017
92665 Asnières-sur-Seine Cedex (FR)

(54) **MANUFACTURING PROCESS FOR HIGH-CAPACITY BATTERY**

(57)    Disclosed is a manufacturing process of a high-capacity battery, including the following steps: S1, performing capacity grading and sorting on several battery cells; S2, grouping: forming at least one battery pack by a plurality of battery cells of the several battery cells selected in S1 and meeting requirements; and S3, battery packaging: first connecting the plurality of battery cells in each of the at least one battery pack in parallel, then locating all of the plurality of battery cells in each of the at least one battery pack in a electrolyte system, and thus completing the manufacturing of the high-capacity battery; or, first locating all of the plurality of battery cells in each of the at least one battery pack in a electrolyte system, then connecting all of the plurality of battery cells in each of the at least one battery pack in parallel, and thus completing the manufacturing of the high-capacity battery. The manufacturing process of the high-capacity battery reduces original differences of the battery cells, improves the yield of the high-capacity battery, ensures that electrolyte cavities of the battery cells communicate with each other, and eliminates performance difference of the high-capacity battery caused by electrolyte consumption differences of the battery cells during an operation process of the high-capacity battery.

Fig. 1

## Description

## Technical Field

The present invention relates to the technical field of lithium batteries, and in particular to a manufacturing process of a high-capacity battery.

## Background

In the related art, the maximum capacity of a lithium battery is about 300 Ah, and if the capacity of the battery needs to be greater than 1000 Ah, a large number of electrode assemblies need to be combined in parallel. In the related art, the numerous electrode assemblies are directly placed in one shell in parallel, and then electrolyte is added to manufacture a high-capacity battery. However, if the performance of one or more electrode assemblies is poor, the performance and the service life of the entire high-capacity battery may be affected due to the "buckets effect", and even the entire high-capacity battery may be scrapped due to the problem of one electrode assembly. This manufacturing manner greatly affects the yield of the high-capacity battery, affects the market competitiveness of the product, and causes a large amount of material waste, thereby being disadvantageous to reducing the cost of the product.

## Summary

Some embodiments of the present invention provide a manufacturing process of a high-capacity battery. According to the method, after capacity grading and sorting are performed on battery cells, battery cells with original consistency meeting requirements are selected to form groups, and then a plurality of battery cells in groups are connected in parallel and are located in one electrolyte system, thereby ensuring that the electrolyte in each of the battery cells in a manufactured high-capacity battery always maintains a dynamic balance, and thus solving the problem of a low yield when an existing high-capacity battery is manufactured by using a plurality of electrode assemblies.

The present invention provides a manufacturing process of a high-capacity battery, and the process includes the following steps:

S1, performing capacity grading and sorting on several battery cells;

S2, grouping: forming at least one battery pack by a plurality of battery cells of the several battery cells selected in the S1 and meeting requirements; and

S3, battery packaging: first connecting battery cells in each of the at least one battery pack in parallel, then locating all of the battery cells in each of the at least one battery pack in an electrolyte system, and thus completing the manufacturing of the high-capacity battery; or,

first locating all of the battery cells in each of the at least one battery pack in an electrolyte system, then connecting the battery cells in each of the at least one battery pack in parallel, and thus completing the manufacturing of the high-capacity battery.

In the high-capacity battery manufactured by the above method, before the plurality of battery cells are grouped, the several battery cells are screened first, thereby reducing the original differences of the plurality of battery cells, and preliminarily ensuring the consistency of the battery cells in the high-capacity battery; and then, at least one battery pack is formed by the plurality of battery cells meeting the requirements, and all battery cells in the battery pack are connected in parallel and inner cavities thereof are communicated, so that all battery cells in the formed high-capacity battery are in an electrolyte sharing system, thereby ensuring that the electrolyte in the battery cells is maintained approximately the same in use, and thus further improving the consistency of the battery cells in the high-capacity battery. Therefore, for the high-capacity battery manufactured in the above three steps, not only is the yield greatly improved, meanwhile the consistency of the battery cells is effectively ensured, the performance of the high-capacity battery is further improved, and the service life of the high-capacity battery is further prolonged.

In an embodiment, the manufacturing process further includes S4: performing low-current charging and discharging on the high-capacity battery in the S3 to complete the formation of the high-capacity battery. It is ensured that an SEI film of each of the battery cells is more stable during the formation, thereby further improving the performance of the high-capacity battery and prolonging the service life of the high-capacity battery.

In an embodiment, the manufacturing process further includes S5: performing an aging treatment on the high-capacity battery, so that the performance of the battery is more stable.

In an embodiment, the manufacturing process further includes: after the formation or the aging treatment, performing an exhaust treatment on an electrolyte cavity of the high-capacity battery to discharge the remaining gas, thereby facilitating to reduce the swelling phenomenon of the battery.

In an embodiment, the manufacturing process further includes: performing vacuumizing before the plurality of battery cells are located in one electrolyte system, so as to form a negative pressure, so that the electrolyte better enters each of the battery cells.

In an embodiment, in the S3, all of the battery cells in each of the at least one battery pack are located in the electrolyte system are located in one electrolyte system by using an electrolyte sharing package.

In an embodiment, in the S3, all of the battery cells in each of the at least one battery pack are located in the electrolyte system are located in one electrolyte system by using an electrolyte sharing pipeline system, and meanwhile the electrolyte sharing pipeline system is able to be used as an explosion venting channel.

The communication of the electrolyte cavities of the battery cells is specifically implemented by the electrolyte sharing main pipeline system in the following two manners:

in a first embodiment, the electrolyte sharing pipeline system includes a main pipeline; each of the battery cells communicates with the main pipeline via a channel formed in the battery cell itself; one end of the main pipeline is provided with a port detachably connected with other assemblies, and is configured to dispose a liquid injection mechanism or an explosion venting mechanism, and the other end of the main pipeline is sealed. The process of implementing electrolyte sharing in this form is substantially as follows: a channel is formed in the battery cell first, then the main pipeline is communicated with the own channel of each of the battery cells, and afterwards electrolyte is injected into each of the battery cells and the main pipeline via the liquid injection mechanism of the main pipeline, so that the electrolyte cavities of the battery cells communicate with each other. In an embodiment, the above process is performed in an environment having a dew point standard of -25°C to -40°C, a temperature of 23°C ± 2°C and a cleanliness of 100,000 levels.

In a second embodiment, the electrolyte sharing pipeline system includes a main pipeline, one end of the main pipeline is provided with a liquid injection mechanism or an explosion venting mechanism, and the other end of the main pipeline is sealed. The main pipeline is connected with each of the battery cells, a sealing mechanism is disposed at a position where each of the battery cells is connected with the main pipeline, and the sealing mechanism is dissolved when encountering the electrolyte, or is opened under an action of an external force, so that the battery cell communicates with the main pipeline.

In an embodiment, the sealing mechanism is a sealing film dissoluble in the electrolyte.

In an embodiment, the sealing mechanism includes a sealing portion and a traction portion; the sealing portion is disposed on a shell of each of the battery cell;

the traction portion is connected to a side surface of the sealing portion that is away from an electrolyte cavity in each of the battery cell; and
when the traction portion is subjected to a traction of an external force, the sealing portion is integrally disengaged, or an opening is formed in the sealing portion.

In an embodiment, a circle of nicks is disposed on the sealing portion, a region defined by the circle of nicks is a weak region, and the traction portion is disposed on the weak region; and when the traction portion is subjected to the traction of the external force, the weak region is torn along the circle of nicks to form an opening.

In an embodiment, in the S3, all of the battery cells in each of the at least one battery pack are located in one electrolyte system by soaked in a box body containing electrolyte.

In an embodiment, in the S1, the capacity grading and sorting on the several battery cells are implemented by one or more combinations of self-discharge screening, internal resistance screening or capacity screening.

In an embodiment, the specific method for performing capacity grading and sorting on the several battery cells in the S1 includes:

S1.1, self-discharge screening: testing self-discharge current of the several battery cells to complete a first-time screening of the several battery cells;

S1.2, internal resistance screening: performing an internal resistance test on qualified battery cells after the first-time screening, to complete a second-time screening of the qualified battery cells after the first-time screening; and

S1.3, capacity screening: performing a capacity test on qualified battery cells after the second-time screening, to complete a third-time screening of the qualified battery cells after the second-time screening, and finally obtaining battery cells meeting grouping requirements.

In an embodiment, the self-discharge screening in the S1.1 includes the following steps:

S1.1.1, acquiring 100% SOC of a battery cell of the several battery cells;

S1.1.2, charging and discharging the battery cell of the several battery cells, so that the capacity of the battery cell of the several battery cells reaches 90% SOC;

S1.1.3, setting a current threshold value to charge the battery cell of the several battery cells, when the voltage of the battery cell of the several battery cells rises or decreases during the charging process, adjusting the magnitude of the current threshold value according to a current step difference to continue to charge the battery cell of the several battery cells until the voltage of the battery cell of the several battery cells is stable and unchanged, recording an adjusted current threshold value E, and taking the current threshold value E as self-discharge current I of the battery cell of the several battery cells, wherein the value range of the current step difference is 0.0001 C to 0.0005 C;

S1.1.4, acquiring the self-discharge current Ii of each of the battery cells according to the S1.1.1 to the S1.1.3;

S1.1.5, calculating a self-discharge current average value: $\bar{I} = \dfrac{I1 + I2 + I3 + \ldots Ii \ldots + In}{n}$, wherein the n is the number of the several battery cells, and ien;

S1.1.6, calculating a deviation between the self-discharge current of each of the battery cells and the self-discharge current average value:

$$\Delta I = \frac{Ii - \bar{I}}{\bar{I}};$$

and

S1.1.7, screening out battery cells with the |ΔI| less than 5%, that is, the qualified battery cells after the first-time screening.

In an embodiment, the internal resistance screening in the S1.2 includes the following steps:

S1.2.1, acquiring 100% SOC of a battery cell of the qualified battery cells after the first-time screening;
S1.2.2, charging and discharging the battery cell of the qualified battery cells after the first-time screening, so that a capacity of the battery cell of the qualified battery cells after the first-time screening reaches a set SOC, and measuring the internal resistance of the battery cell of the qualified battery cells after the first-time screening at this time, wherein the set SOC is 20% SOC to 90% SOC;
S1.2.3, acquiring an internal resistance Ri of each of the battery cells according to the S1.2.1 to the S1.2.2;
S1.2.4, calculating an internal resistance average value of the qualified battery cells after the first-time screening: $\bar{R} = \dfrac{R1 + R2 + R3 + \ldots Ri \ldots + Rn}{n}$, wherein the n is the number of the qualified battery cells after the first-time screening, and ien;
S1.2.5, calculating a deviation between the internal resistance of each of the battery cells and the internal resistance average value: $\Delta R = \dfrac{Ri - \bar{R}}{\bar{R}}$; and
S1.2.6, screening out battery cells meeting internal resistance requirements with the |ΔR| less than 10%, that is, the qualified battery cells after the second-time screening.

In an embodiment, the capacity screening in the S1.3 includes the following steps:

S1.3.1, acquiring the capacity Q of a battery cell of the qualified battery cells after the second-time screening;

performing constant current discharging on the battery cell of the qualified battery cells after the second-time screening according to standard discharge current to discharge the battery cell of the qualified battery cells after the second-time screening to a discharge rated voltage;

performing constant current charging on the battery cell of the qualified battery cells after the second-time screening according to standard charge current, when the battery cell of the qualified battery cells after the second-time screening is charged to a charge rated voltage, charging the battery cell of the qualified battery cells after the second-time screening at the rated voltage to cut-off current, and recording the capacity Q of the battery cell of the qualified battery cells after the second-time screening at this time;

S1.3.2, acquiring the capacity Qi of each of the qualified battery cells after the second-time screening according to the S1.3.1;

S1.3.3, calculating a capacity average value of the qualified battery cells after the second-time screening: $\bar{Q} = \dfrac{Q1 + Q2 + Q3 + \ldots Qi \ldots + Qn}{n}$, wherein the n is the number of the qualified battery cells after the second-time screening, and ien;

S1.3.4, calculating a deviation between the capacity of each of the qualified battery cells after the second-time screening and the capacity average value:

$$\Delta Q = \frac{Qi - \bar{Q}}{\bar{Q}}; \text{ and}$$

S1.3.5, screening out battery cells meeting capacity requirements with the |ΔQ| less than 1%, that is, the battery cells meeting grouping requirements.

**Beneficial Effects of the Present invention:**

1. In the present invention, the battery cells are first screened by one or more combinations of self-discharge screening, internal resistance screening or capacity screening, to remove the battery cells that do not meet performance requirements and to select the battery cells with high consistency, this screening work reduces the original differences of the battery cells and improves the yield of the high-capacity battery, thereby facilitating to ensure the quality of the high-capacity battery and reducing the cost of the product.

2. In the present invention, the electrolyte cavities of the battery cells meeting consistency requirements are shared, thereby improving the uniformity of the electrolyte during an operation process of the high-capacity battery, eliminating performance differences of the battery cells caused by electrolyte consumption differences of the battery cells during the operation process of the high-capacity battery, ensuring the consistency of the electrolyte in the battery cells, and meanwhile ensuring the consistency of the temperatures of the battery cells to a certain extent. In this way, not only is the cycle life of the high-capacity battery prolonged, meanwhile potential safety hazards caused by an excessively high temperature of a certain battery cell is also reduced, thereby improving the comprehensive performance and market competitiveness of the product.

3. The electrolyte sharing pipeline system of the present invention is able to not only implement electrolyte sharing of the plurality of battery cells, is easy to assemble and has good sealing property, but the electrolyte sharing pipeline system is also able to be used as the explosion venting channel.

4. The electrolyte sharing package of the present invention implements the electrolyte sharing of the plurality of battery cells, has a simple structure, is convenient for liquid injection and liquid replenishment, has a low manufacturing cost, and is especially suitable for use when pouch batteries are used as the battery cells.

5. In the present invention, the sealing film dissoluble in the electrolyte is used as the sealing mechanism, therefore not only is the sealing of a single battery cell realized, meanwhile due to the solubility in the electrolyte, when the plurality of battery cells need to form the electrolyte sharing system, the plurality of battery cells are able to form the electrolyte sharing system just by directly injecting electrolyte into the electrolyte sharing package or an electrolyte sharing pipeline without performing an additional operation, so that the entire process is simple to operate.

6. In the present invention, when electrolyte sharing is implemented by the electrolyte sharing pipeline system, the sealing mechanism composed of the sealing portion and the traction portion is utilized, therefore not only is the sealing of a single battery cell realized, when the plurality of battery cells need to from the electrolyte sharing system, the inner cavities of all battery cells are able to be communicated just by directly providing an external force to the sealing mechanism, and the sealing structure is easy to manufacture and assemble.

7. In the present invention, step-by-step screening is performed on the battery cells by first performing self-discharge screening, then performing internal resistance screening, and finally performing capacity screening, therefore compared with performing capacity grading and sorting by using a single index, the consistency of original performances of the battery cells is able to be ensured to the greatest extent, thereby ensuring the quality and the service life of the high-capacity battery.

The other advantages, objectives and features of the present invention will be partially embodied in the following description, and partially understood by those skilled in the art via researches and practices of the present invention.

**Brief Description of the Drawings**

Fig. 1 is a schematic flowchart of a manufacturing process of a high-capacity battery provided in the present invention;

Fig. 2 is a schematic structural diagram of forming a battery pack by battery cells B in Embodiment 1;

Fig. 3 is a schematic structural diagram of cooperation of a battery pack formed by an electrolyte sharing package and battery cells B in Embodiment 1;

Fig. 4 is a schematic structural diagram after only a battery pack is loaded into a high-capacity battery shell in Embodiment 1;

Fig. 5 is a schematic structural diagram after the electrolyte sharing package is loaded into the high-capacity battery shell in Embodiment 1;

Fig. 6 is a schematic structural diagram of a battery cell C in Embodiment 2;

Fig. 7 is a schematic diagram of a second sealing structure in Embodiment 2;

Fig. 8 is a schematic structural diagram of forming a high-capacity battery by battery cells C in Embodiment 2;

Fig. 9 is a schematic exploded view of a battery cell D in Embodiment 3;

Fig. 10 is a schematic structural diagram of the battery cell D in which a lower cover plate is provided with a sealing film in Embodiment 3;

Fig. 11 is a schematic structural diagram in the case of butt-joint of two battery cells D in Embodiment 3;

Fig. 12 is a schematic structural diagram of forming a high-capacity battery by battery cells D in Embodiment 3;

Fig. 13 is a schematic structural diagram of a battery cell E in Embodiment 4;

Fig. 14 is a schematic structural diagram of a battery cell F in Embodiment 5;

Fig. 15 is a schematic structural diagram of the battery cell F in which a first sealing mechanism is mounted on a lower cover plate of the battery cell F in Embodiment 5;

Fig. 16 is a schematic structural diagram of the battery cell F in which a second sealing mechanism is mounted on the lower cover plate of the battery cell F in Embodiment 5;

Fig. 17 is a schematic structural diagram of a battery cell G in Embodiment 6;

Fig. 18 is a schematic structural diagram of a correspondence between a main pipeline and a plurality of battery cells G in Embodiment 6;

Fig. 19 is a schematic diagram of an exploded structure of forming a high-capacity battery by battery cells G in Embodiment 6; and

Fig. 20 is a schematic diagram of an external structure of a high-capacity battery manufactured by immersion sharing in Embodiment 7.

The reference signs are as follows:

1-battery cell B; 2-battery cell C; 3-battery cell D; 30-outer shell; 31-upper cover plate; 32-lower cover plate; 33-cylinder; 321-first through hole; 322-pipeline; 323-second through hole; 34-connecting pipe fitting; 35-connecting member; 36-inner shell;

4-battery cell E; 5-battery cell F; 6-battery cell G; 7-sealing mechanism; 71-traction portion; 72-sealing portion; 8-electrolyte sharing package; 81-liquid inlet; 82-liquid inlet pipe; 9-high-capacity battery shell; 10-main pipeline; 11-main liquid injection opening; 12-conductive connecting sheet.

**Detailed Description of the Embodiments**

In order to make the objectives, technical solutions and advantages of the present invention clearer, the present invention will be further described in detail below with reference to the drawings and embodiments. However, it should be understood that specific embodiments described herein are merely used to explain the present invention and are not intended to limit the scope of the present invention. In addition, in the following illustration, descriptions of well-known structures and technologies are omitted to avoid unnecessarily obscuring the concepts of the present invention.

In the present invention, a manufacturing process of a high-capacity battery requires that several battery cells are connected in parallel, and the battery cells in the present invention at least include the following several types:

a battery cell A is a commercially available battery, the commercially available battery is divided into a commercially available square battery and a commercially available pouch battery, and the shell of the commercially available square battery is usually made of aluminum or steel; the shell of the commercially available pouch battery is made of an aluminum plastic film; and in addition, it should be noted that both the commercially available square battery and the commercially available pouch battery have a sealed inner cavity, electrolyte is contained in the inner cavity, and at least one group of electrode assemblies is disposed in the inner cavity.

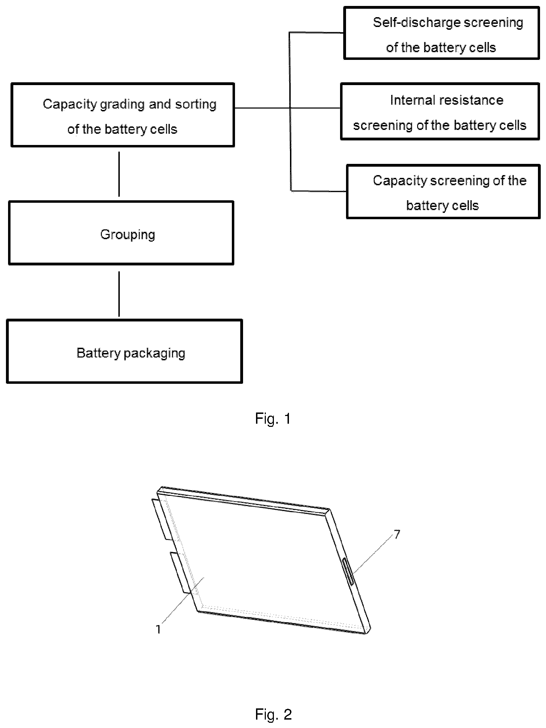

A battery cell B is similar to the structure of the commercially available pouch battery, except that a sealing mechanism is disposed on the basis of the commercially available pouch battery; and the sealing mechanism is dissolved when encountering electrolyte, or is able to be opened under the action of an external force, as shown in Fig. 2.

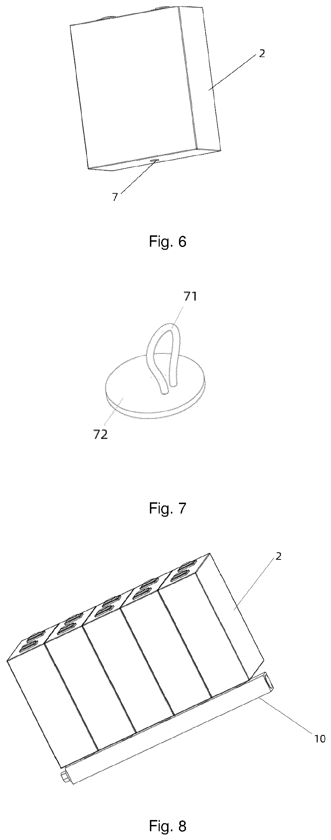

A battery cell C is similar to the structure of the commercially available square battery, except that a sealing mechanism is disposed on the basis of the commercially available square battery; and the sealing mechanism is dissolved when encountering electrolyte, or is able to be opened under the action of an external force, as shown in Fig. 6.

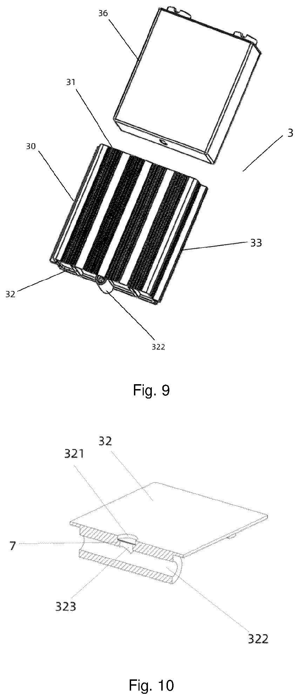

A battery cell D is: at least one commercially available square battery is placed into an outer shell after an opening is formed in the commercially available square battery, a sealing mechanism is disposed on the outer shell, and a confluence pipe is further disposed at a position corresponding to the sealing mechanism; and the sealing mechanism is dissolved when encountering electrolyte, or is able to be opened under the action of an external force, as shown in Fig. 9.

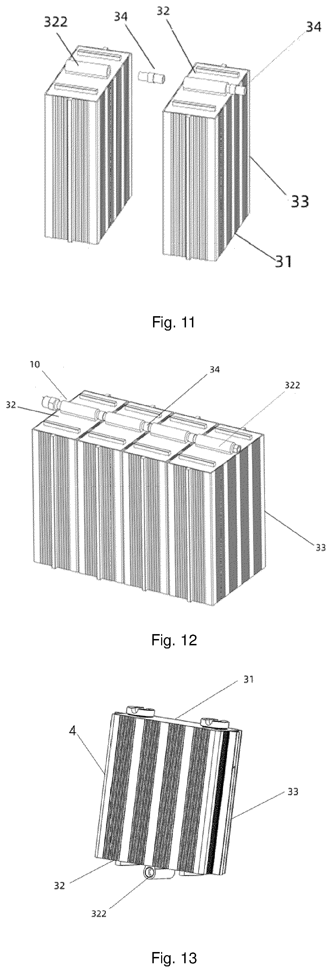

A battery cell E is: a plurality of commercially available pouch batteries are placed in an outer shell after openings are formed in the commercially available pouch batteries, a sealing mechanism is disposed on the outer shell, and a confluence pipe is further disposed at a position corresponding to the sealing mechanism; and the sealing mechanism is dissolved when encountering electrolyte, or is able to be opened under the action of an external force, as shown in Fig. 13.

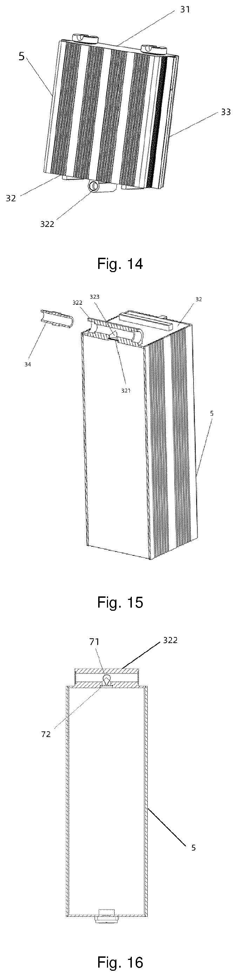

A battery cell F is a self-made square battery; the self-made square battery includes an outer shell, an electrode assembly and a sealing mechanism; the electrode assembly is hermetically mounted in the outer shell, the electrode assembly is connected with positive and negative electrode columns on the outer shell, and electrolyte is contained in the outer shell; the sealing mechanism is disposed on the outer shell, and a confluence pipe is further disposed at a position corresponding to the sealing mechanism of the outer shell; and the sealing mechanism is dissolved when encountering the electrolyte, or is able to be opened under the action of an external force, as shown in Fig. 14.

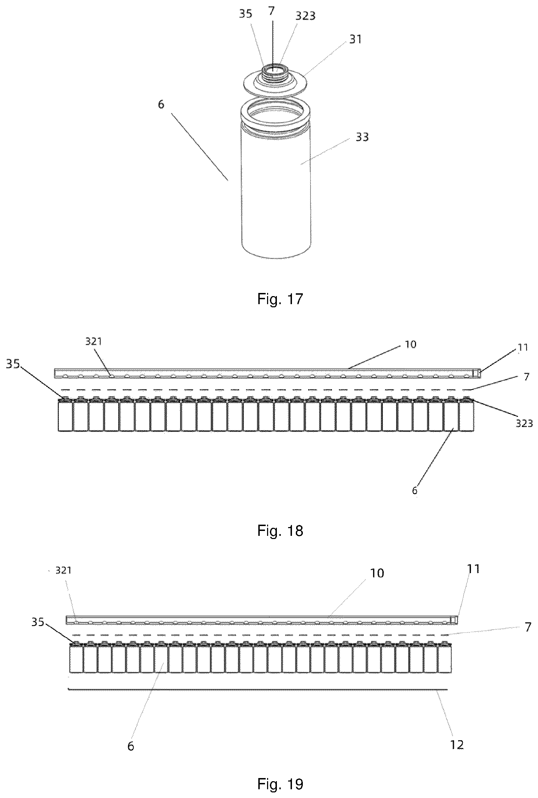

A battery cell G is a self-made cylindrical battery; the difference with a commercially available cylindrical battery lies in that a sealing mechanism is disposed in an electrode column of the cylindrical battery; and the sealing mechanism is dissolved when encountering electrolyte, or is able to be opened under the action of an external force, as shown in Fig. 18.

As shown in Fig. 1, the basic implementation principle of the manufacturing process of the high-capacity battery provided in the present invention includes:

S1, performing capacity grading and sorting on several battery cells;

S2, grouping: forming at least one battery pack by a plurality of battery cells of the several battery cells selected in the S1 and meeting requirements; for example, 100 battery cells meeting the requirements are screened out in the S1, each battery pack needs to be composed of 10 battery cells, and then the 100 battery cells are able to form 10 battery packs; and

S3, battery packaging: first connecting the battery cells in each of the at least one battery pack in parallel, then locating all of the battery cells in each of the at least one battery pack in one electrolyte system, and thus completing the manufacturing of the high-capacity battery;
or,

first locating all of the battery cells in each of the at least one battery pack in one electrolyte system, then connecting the battery cells in each of the at least one battery pack in parallel, and thus completing the manufacturing of the high-capacity battery.

The manners of forming the electrolyte sharing system in the S3 at least include: the first manner is to use an electrolyte sharing package, the second manner is to use an electrolyte sharing pipeline system, and the third manner is to form a liquid injection channel in each of the battery cells in the battery pack and then directly soak each of the battery cells in a high-capacity battery shell containing electrolyte (hereinafter referred to as immersion sharing for short).

In some embodiments, before liquid injection, a vacuumizing treatment is able to be first performed on a semi-finished high-capacity battery by a liquid injection vacuumizing valve.

S4, formation: performing low-current charging and discharging on the semi-finished high-capacity battery in the S3 to complete the manufacturing of the high-capacity battery. The specific process of the formation step in the present embodiment is as follows:

after charging at constant current of 0.1 C to 3.4 V, charging at a constant voltage of 3.4 V to cutoff current 0.01 C, and stewing for 30 min;

then, discharging at constant current of 0.1 C to 2.5 V, and stewing for 30 min; and

charging at constant current of 0.2 C to 3.4 V, charging at the constant voltage of 3.4 V to the cutoff current 0.01 C, and stewing for 30 min.

A more complete SEI film is formed for the high-capacity battery, so that the high-capacity battery has a more stable cycle capability.

In some embodiments, after formation, the process further includes S5: performing an aging treatment on the high-capacity battery at an aging temperature of 50°C and an aging time of 48 h. In an embodiment, after the aging treatment, an exhaust treatment is performed on the high-capacity battery to discharge the remaining gas after formation, thereby reducing the swelling probability of the high-capacity battery.

In some embodiments, if the aging step is not performed, the exhaust treatment is able to be directly performed on the high-capacity battery after formation.

The use of the above several electrolyte sharing manners on different types of battery cells will be described in more detail by a plurality of embodiments below.

Embodiment 1

The present embodiment is a solution for implementing electrolyte sharing by using an electrolyte sharing package.

In the present embodiment, a high-capacity battery is manufactured by using battery cells B1, and in the present embodiment, a sealing mechanism 7 is a sealing film that is able to be dissolved when encountering electrolyte; the specific material of the sealing film is able to be one of polymethyl methacrylate, polyvinyl chloride, polycarbonate, or ABS plastic, in order to prevent the sealing film from being dissolved in the electrolyte in the battery cell before sharing is implemented, an isolation layer is able to be disposed on the side of the sealing film that faces an electrolyte cavity of the battery cell, and the isolation layer is insoluble in the electrolyte, but is able to fall off after the sealing film is dissolved.

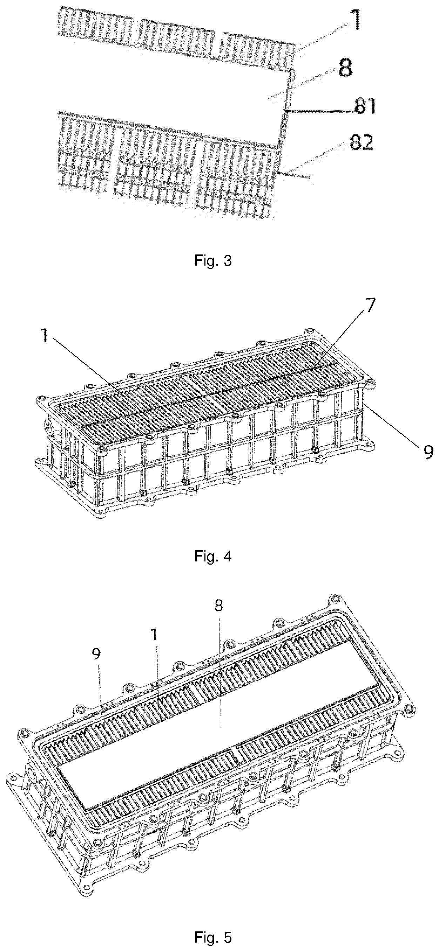

Referring to Fig. 3, an electrolyte sharing package 8 is a hard shell, the electrolyte sharing package 8 is a rectangular shell with an open end, at least one liquid inlet 81 is formed in the electrolyte sharing package, a liquid inlet pipe 82 is disposed on the liquid inlet 81, the liquid inlet pipe 82 and the electrolyte sharing package 8 are hot-melted into a whole, and a good hermetical connection is able to be realized after the two parts are hot-melted into a whole.

Referring to Fig. 4 and Fig. 5, the process of manufacturing the high-capacity battery by using the battery cells B1 and the electrolyte sharing package 8 in the present embodiment is as follows:

firstly, a plurality of battery cells B1 with substantially consistent performance are screened out, and the plurality of battery cells B1 are connected in parallel to form a battery pack, adjacent surfaces of the battery cells are hermetically connected, and in an embodiment, a sealant is used;

secondly, the battery pack is placed in a high-capacity battery shell 9;

next, the electrolyte sharing package 8 is placed on the battery pack, the open end of the electrolyte sharing package is located on the side of the battery cell B1 that is provided with a sealing film, then the electrolyte sharing package 8 is hermetically connected with the battery pack, and in an embodiment, the hermetical connection is implemented by using a sealant; and

then, positive and negative electrodes of the battery pack are connected with positive and negative electrodes of the high-capacity battery, and the high-capacity battery is sealed. The positive and negative electrodes of the high-capacity battery have two forms: one is positive and negative electrode columns disposed on the same side wall of the high-capacity battery, and the other is to use two opposite side walls of the high-capacity battery shell as the positive and negative electrode columns (in an embodiment, the two side walls are upper and lower cover plates of the high-capacity battery).

The liquid inlet pipe 82 extends out of an explosion venting port of the high-capacity battery shell. Finally, the liquid inlet pipe 82 is cut first, then a vacuumizing operation is performed, electrolyte is then injected into the electrolyte sharing package 8, the liquid inlet pipe 82 is sealed, and an explosion venting valve is mounted. Under the action of the electrolyte, the sealing film on each of the battery cells B1 is dissolved, the electrolyte enters each of the battery cells B1, the electrolyte in the electrolyte sharing package 8 communicates with the electrolyte in each of the battery cells B1, therefore all battery cells B1 are in a unified electrolyte sharing system, and thus completing the manufacturing of the high-capacity battery.

In another embodiment, commercially available pouch batteries in battery cells A and the electrolyte sharing package 8 are directly used for manufacturing the high-capacity battery, and for a specific process, reference is able to be made to Fig. 4 and Fig. 5:

firstly, a plurality of commercially available pouch batteries with substantially consistent performance are screened out, and the plurality of commercially available pouch batteries are connected in parallel to form a battery pack, adjacent surfaces of the battery cells are hermetically connected, and a sealant is preferably used;

next, an opening is formed in each commercially available pouch battery in the battery pack preferably in a temperature having a dew point standard of -25°C to -40°C, a temperature of 23°C ± 2°C and a cleanliness of 100,000 levels, the battery pack is then placed in a high-capacity battery shell 9, or after the battery pack is placed in the high-capacity battery shell 9, the opening is formed in each commercially available pouch battery;

subsequently, the electrolyte sharing package 8 is placed on the battery pack, the open end of the electrolyte sharing package 8 is located on the side of the pouch battery that is provided with the opening, then the electrolyte sharing package 8 is hermetically connected with the battery pack, and in an embodiment, the hermetical connection is able to be implemented by using a sealant; and

then, the positive and negative electrodes of the battery pack are connected with the positive and negative electrodes of the high-capacity battery, and the high-capacity battery is sealed. The positive and negative electrodes of the high-capacity battery have two forms: one is positive and negative electrode columns disposed on the same side wall of the high-capacity battery, and the other is to use two opposite side walls of the high-capacity battery shell as the positive and negative electrode columns (preferably, the two side walls are upper and lower cover plates of the high-capacity battery).

The liquid inlet pipe 82 extends out of the explosion venting port.

Finally, the liquid inlet pipe 82 of the electrolyte sharing package 8 is cut, then a vacuumizing operation is performed, electrolyte is then injected into the electrolyte sharing package 8, the liquid inlet pipe 82 is sealed, and the explosion venting valve is mounted. The electrolyte enters each commercially available pouch battery, the electrolyte in the electrolyte sharing package communicates with the electrolyte in each commercially available pouch battery, therefore all commercially available pouch batteries are in a unified electrolyte sharing system, and thus completing the manufacturing of the high-capacity battery.

Although the commercially available pouch battery is able to be selected in this manner, it is difficult to form the opening in the commercially available pouch battery, if a manual operation is employed, the working efficiency is relatively low, and it is difficult to ensure the quality of the opening, and if a mechanical tool is used, the manufacturing cost is increased.

Of course, in some embodiments, the high-capacity battery is also able to be manufactured by the electrolyte sharing package 8 + battery cells C2 and the electrolyte sharing package 8 + commercially available square batteries by using the above method, the specific manufacturing processes are consistent with the manufacturing processes of the two pouch battery structures, and thus details are not described herein again.

In the present embodiment, the step of connecting the battery cells in parallel is able to be completed prior to electrolyte sharing, and is also able to be completed after electrolyte sharing.

The electrolyte sharing of the plurality of battery cells is implemented by the electrolyte sharing package 8, so that the performance of the electrolyte in the entire parallel battery cell is consistent, and meanwhile, it is also convenient to perform liquid supplementation on the battery pack, thereby ensuring the service life of each of the battery cells, and thus improving the performance and quality of the high-capacity battery. In addition, the electrolyte sharing package is simple in structure and low in manufacturing cost.

Embodiment 2

The present embodiment is a solution for implementing electrolyte sharing by using an electrolyte sharing pipeline system.

In the present embodiment, a high-capacity battery is manufactured by using battery cells C2.

As shown in Fig. 6, in the present embodiment, the first form of a sealing mechanism 7 on the battery cell C2 is a sealing film that is able to be dissolved when encountering electrolyte; the specific material of the sealing film is able to be one of polymethyl methacrylate, polyvinyl chloride, polycarbonate, or ABS plastic, in order to prevent the sealing film from being dissolved in the electrolyte in the battery cell before sharing is implemented, an isolation layer is able to be disposed on the side of the sealing film that faces an inner side of the battery cell, and the isolation layer is insoluble in the electrolyte, but is able to fall off after the sealing film is dissolved, thereby opening a liquid injection channel.

The second form of the sealing mechanism 7 on the battery cell C2 is specifically as shown in Fig. 7, including a traction portion 71 and a sealing portion 72, wherein the traction portion 71 is fixedly mounted on the sealing portion 72, the sealing portion 72 is disposed on the battery cell C by bonding or welding, and in an embodiment, a circle of nicks are disposed on the sealing portion 72 as a weak portion, so as to easily form an opening after the action of an external force.

Referring to Fig. 8, in the present embodiment, the electrolyte sharing pipeline system includes a main pipeline 10, one end of the main pipeline 10 is able to be provided with a port detachably connected with other mechanisms, the other end is sealed, and the sealing is preferably implemented by using a detachable plug. The main pipeline 10 is able to be mounted in a direct welding manner on a battery pack composed of the battery cells C, and when the sealing film is dissolved encountering electrolyte, the main pipeline 10 is able to communicate with the electrolyte cavity of each of the battery cells C2; or, the main pipeline 10 is provided with a plurality of branch pipelines, the branch pipelines are fixedly connected with each of the battery cells C2, and when the sealing film is dissolved encountering electrolyte, the main pipeline 10 is able to communicate with the electrolyte cavity of each of the battery cells C2 via the plurality of branch pipelines.

The process of manufacturing the high-capacity battery by using the battery cells C2 with the sealing mechanisms in the first form and the electrolyte sharing pipeline system is as follows:

firstly, a plurality of battery cells C2 with substantially consistent performance are screened out, the plurality of battery cells C2 are connected in parallel to form a battery pack, then the main pipeline 10 is connected with each of the battery cells C2, one end of the main pipeline 10 is sealed, and one end thereof is connected with a liquid injection vacuumizing mechanism; and

then, the main pipeline 10 is first vacuumized by the liquid injection vacuumizing mechanism, electrolyte is then injected into the main pipeline 10, after the liquid injection is completed, the liquid injection vacuumizing mechanism is dismounted, and the explosion venting valve is mounted. The electrolyte dissolves the sealing film of each of the battery cells C2, so that the electrolyte enters the battery cell C2, and the electrolyte in the main pipeline 10 communicates with the electrolyte in each of the battery cells C2, therefore all battery cells C2 are in a unified electrolyte sharing system, and thus completing the manufacturing of the high-capacity battery.

The process of manufacturing the high-capacity battery by using the battery cells C2 with the sealing mechanisms in the second form and the electrolyte sharing pipeline system is as follows:

firstly, a plurality of battery cells C2 with substantially consistent performance are screened out, the plurality of battery cells C2 are connected in parallel to form a battery pack, and then the main pipeline 10 is connected with each of the battery cells C2; and

then, the liquid injection vacuumizing mechanism and the plug of the main pipeline 10 are dismounted preferably in the environment having the dew point standard of -25°C to -40°C, the temperature of 23°C ± 2°C and the cleanliness of 100,000 levels, the traction portions 71 of all battery cells C2 are connected by using one traction wire rope, and the traction wire rope is pulled by an external force, so that openings are formed in the sealing portions of all battery cells C2 or the entirety is disengaged;

next, the plug and the liquid injection vacuumizing mechanism are remounted, and a vacuumizing operation is performed on the battery pack; and

finally, electrolyte is injected into the main pipeline 10 by the liquid injection vacuumizing mechanism, after the liquid injection is completed, the liquid injection vacuumizing mechanism is dismounted, and the explosion venting valve is mounted. The electrolyte enters the battery cell C2, and the electrolyte in the main pipeline 10 communicates with the electrolyte in each of the battery cells C2, therefore all battery cells C2 are in a unified electrolyte sharing system, and thus completing the manufacturing of the high-capacity battery.

In other embodiments, the sealing mechanisms 7 on the battery cells C2 are ordinary sealing films, and the ordinary sealing films are punctured by using an operating rod provided with a plurality of puncture needles to form openings in the battery cells C2. The distance between adjacent puncture needles is consistent with the distance between the ordinary sealing films on adjacent battery cells C2, and the specific process of forming the openings in the battery cells C2 by using the ordinary sealing films is as follows:
dismounting the liquid injection vacuumizing mechanism or the plug preferably in the environment having the dew point standard of -25°C to -40°C, the temperature of 23°C ± 2°C and the cleanliness of 100,000 levels, extending the operating rod into the main pipeline 10, ensuring that the puncture needles are aligned with the ordinary sealing films, and driving the puncture needles to move downwards, so that the openings are formed in the ordinary sealing films of all battery cells C2.

In the present embodiment, the step of connecting the battery cells C2 in parallel is able to be completed prior to electrolyte sharing, and is also able to be completed after electrolyte sharing.

Embodiment 3

The present embodiment is a solution for implementing electrolyte sharing by using an electrolyte sharing pipeline system.

Referring to Fig. 9, in the present embodiment, a high-capacity battery is manufactured by using battery cells D3; in the present embodiment, a commercially available square battery is placed in an outer shell to form a battery cell D3 having a double-layer shell; that is, the battery cell D3 has an inner shell 36 and an outer shell 30, an electrode assembly is accommodated in the inner shell 36, and the inner shell is the shell of the commercially available square battery.

Referring to Fig. 9 and Fig. 10, the outer shell of the battery cell D3 includes an upper cover plate 31, a lower cover plate 32, a cylinder 33, and a sealing mechanism 7; the lower cover plate is provided with a first through hole 321, and is further provided with a pipeline 322 covering the first through hole and extending in a thickness direction of the battery cell D3 (during manufacturing, the pipeline 322 and the lower cover plate 32 are integrally formed in an extrusion manner), a second through hole 323 is formed in a side wall of the pipeline 322, the first through hole 321 and the second through hole 323 are respectively circular or long-strip-shaped through holes, and the first through hole 321 is connected with and passes through the second through hole 323.

The sealing mechanism 7 is disposed at the first through hole 321 or the second through hole 323.

The sealing mechanism 7 on the battery cell D3 is the same as the sealing mechanism in Embodiment 2, and also has two forms.

In the present embodiment, the form of the main pipeline 10 is similar to that in Embodiment 2, except that in order to facilitate the installation and sealing property of the electrolyte sharing pipeline system, the main pipeline 10 is formed by splicing. Specifically, referring to Fig. 11, in the present embodiment, the pipeline 322 of each of the battery cells D3 is hermetically spliced to form the main pipeline by a connecting pipe fitting 34, thereby ensuring the sealing property and stability of the connection between the pipelines 322. Specifically, the connecting pipe fitting 34 includes two connecting nozzles, the two ends of the pipeline 322 are provided with connecting ports, and the connecting nozzles are embedded into the connecting ports for hermetical connection; or the connecting pipe fitting 34 comprises two connecting ports, the two ends of the pipeline 322 are provided with connecting nozzles, and the connecting nozzles are embedded into the connecting ports for hermetical connection. The shape of the connecting nozzle is preferably a micro-cone shape, so that the connecting nozzle is able to be conveniently inserted into the connecting port, and preferably, the connecting nozzle is in interference fit with the connecting port, therefore such a design form is able to improve the sealing property to a certain extent. The fixing manner between the connecting nozzle and the connecting port is preferably riveting, of course, a threaded connection manner is also able to be used, and a sealant is also able to be added between the connecting nozzle and the connecting port, so that the hermetical connection is more reliable.

The process of manufacturing the high-capacity battery by using the battery cells D3 with the sealing mechanisms in the first form and the electrolyte sharing pipeline system is as follows:

firstly, a plurality of commercially available square batteries with substantially consistent performance are screened out and are made into battery cells D3 having double-layer shells, wherein the specific process of this step is as follows:

hermetically mounting the sealing mechanism 7 on the first through hole 321 of the lower cover plate 32, sealing the first through hole 321, welding the lower cover plate 32 and the cylinder 33 (preferably, a welding manner is used for fixing), forming an opening in the commercially available square battery preferably in the environment having the dew point standard of -25°C to -40°C, the temperature of 23°C ± 2°C and the cleanliness of 100,000 levels, placing the commercially available square battery in the cylinder 33 with the lower cover plate 32 welded, and then fixedly connecting the upper cover plate 31 with the cylinder 33 (preferably, the welding manner is used for fixing), so as to form a battery cell D3.

Next, a plurality of battery cells D3 are connected in parallel to form a battery pack, and during the process of connecting the plurality of battery cells D3 in parallel to form the battery pack, the pipeline 322 on each of the battery cells D3 is spliced and communicated by the connecting pipe fitting 34 to form the main pipeline 10; and

then, the liquid injection vacuumizing mechanism and the plug are mounted, and vacuumizing is performed by using the liquid injection vacuumizing mechanism; electrolyte is then injected into the main pipeline 10, after liquid injection is completed, the liquid injection vacuumizing mechanism is dismounted, and the explosion venting valve is mounted. The electrolyte dissolves the sealing film of each of the battery cells D3, so that the electrolyte enters the battery cell D3, the electrolyte in the main pipeline 10 communicates with the electrolyte in each of the battery cells D3, therefore all battery cells D3 are in a unified electrolyte sharing system, and thus completing the manufacturing of the high-capacity battery, as shown in Fig. 12.

The process of manufacturing the high-capacity battery by using the battery cells D3 with the sealing mechanisms in the second form and the electrolyte sharing pipeline system is as follows:

firstly, a plurality of commercially available square batteries with substantially consistent performance are screened out and are made into battery cells D3 having double-layer shells, wherein the specific process of this step is as follows:

hermetically mounting the sealing mechanism 7 on the first through hole 321 of the lower cover plate 32, sealing the first through hole 321, welding the lower cover plate 32 and the cylinder 33 (preferably, the welding manner is used for fixing), forming an opening in the commercially available square battery preferably in the environment having the dew point standard of -25°C to -40°C, the temperature of 23°C ± 2°C and the cleanliness of 100,000 levels, placing the commercially available square battery in the cylinder 33 with the lower cover plate 32 welded, and then fixedly connecting the upper cover plate 31 with the cylinder 33 (preferably, the welding manner is used for fixing), so as to form a battery cell D3.

Next, a plurality of battery cells D3 are connected in parallel to form a battery pack, and during the process of connecting the plurality of battery cells D3 in parallel to form the battery pack, the pipeline 322 on each of the battery cells D3 is spliced and communicated by the connecting pipe fitting 34 to form the main pipeline 10; and

then, the liquid injection vacuumizing mechanism and the plug are dismounted preferably in the environment having the dew point standard of -25°C to -40°C, the temperature of 23°C ± 2°C and the cleanliness of 100,000 levels, the traction portions 71 of all battery cells D3 are connected by using one traction wire rope, and the traction wire rope is pulled by an external force, so that openings are formed in the sealing portions of all battery cells D3 or the entirety is disengaged; and

next, the liquid injection vacuumizing mechanism and the plug are remounted, a vacuumizing operation is performed on the battery pack, after liquid injection is completed, the liquid injection vacuumizing mechanism is dismounted, and the explosion venting valve is mounted. Electrolyte is injected into the main pipeline 10 by a liquid injection mechanism, the electrolyte enters the battery cell D3, and the electrolyte in the main pipeline 10 communicates with the electrolyte in each of the battery cells D3, therefore all battery cells D3 are in a unified electrolyte sharing system, and thus completing the manufacturing of the high-capacity battery, as shown in Fig. 12.

In other embodiments, the sealing mechanisms 7 on the battery cell D3 are ordinary sealing films, and the ordinary sealing films are punctured by using an operating rod provided with a plurality of puncture needles to form the openings in the battery cells D3. The distance between adjacent puncture needles is consistent with the distance between the ordinary sealing films on adjacent battery cells, and the specific process of forming the openings in the battery cells D3 by using the ordinary sealing films is as follows:

dismounting the liquid injection vacuumizing mechanism or the plug preferably in the environment having the dew point standard of -25°C to -40°C, the temperature of 23°C ± 2°C and the cleanliness of 100,000 levels, extending the operating rod into the main pipeline 10, ensuring that the puncture needles are aligned with the ordinary sealing films, and driving the puncture needles to move downwards, so that the openings are formed in the ordinary sealing films of all battery cells D3.

In the present embodiment, the step of connecting the battery cells D3 in parallel is able to be completed prior to electrolyte sharing, and is also able to be completed after electrolyte sharing.

Embodiment 4

The embodiment is a solution for implementing electrolyte sharing by using an electrolyte sharing pipeline system.

In the present embodiment, a high-capacity battery is manufactured by using battery cells E4; referring to Fig. 13, in the present embodiment, a plurality of commercially available pouch batteries are connected in parallel and then are placed in an outer shell to form a battery cell E4; and an opening needs to formed in each commercially available pouch battery in the battery cell E4.

The structure of the outer shell of the battery cell E4 is substantially consistent with the structure of the outer shell 30 of the battery cell D in Embodiment 3, except that the outline dimension is different.

A sealing mechanism on the battery cell E4 is the same as the sealing mechanism in Embodiment 2, and also has two forms.

In the present embodiment, the form of the main pipeline 10 is the same as that in Embodiment 3.

Referring to Fig. 13, Fig. 10 and Fig. 11, the process of manufacturing the high-capacity battery by using the battery cells E4 with the sealing mechanisms in the first form and the electrolyte sharing pipeline system is as follows:

firstly, a plurality of commercially available pouch batteries with substantially consistent performance are screened out, and the commercially available pouch batteries are connected in parallel to form groups and then are placed in the outer shell to manufacture the battery cell E, wherein the specific process of this step is as follows:

hermetically mounting the sealing mechanism 7 on the first through hole 321 of the lower cover plate 32, sealing the first through hole 321, welding the lower cover plate 32 and the cylinder 33 (preferably, the welding manner is used for fixing), respectively connecting positive and negative tabs of the plurality of commercially available pouch batteries with positive and negative electrode columns of the upper cover plate 31, forming openings in the plurality of commercially available pouch batteries preferably in the environment having the dew point standard of -25°C to -40°C, the temperature of 23°C ± 2°C and the cleanliness of 100,000 levels, placing the plurality of commercially available pouch batteries which have been connected with the upper plate in the cylinder 33 with the lower cover plate 32 welded, and then fixedly connecting the upper cover plate 31 with the cylinder 33 (preferably, the welding manner is used for fixing), so as to form a battery cell E4.

Next, a plurality of battery cells E4 are connected in parallel to form a battery pack, and during the process of connecting the plurality of battery cells E4 in parallel to form the battery pack, the pipeline 322 on each of the battery cells E4 is spliced and communicated by the connecting pipe fitting 34 to form the main pipeline; and

then, the liquid injection vacuumizing mechanism and the plug are mounted, vacuumizing is first performed by the liquid injection vacuumizing mechanism, electrolyte is then injected into the main pipeline 10, after liquid injection is completed, the liquid injection vacuumizing mechanism is dismounted, and the explosion venting valve is mounted. The electrolyte dissolves the sealing film of each of the battery cells E4, so that the electrolyte enters the battery cell E4, the electrolyte in the main pipeline communicates with the electrolyte in each of the battery cells E4, therefore all battery cells E4 are in a unified electrolyte sharing system, and thus completing the manufacturing of the high-capacity battery.

Referring to Fig. 13, the process of manufacturing the high-capacity battery by using the battery cells E4 with the sealing mechanisms in the second form and the electrolyte sharing pipeline system is as follows:

firstly, a plurality of commercially available pouch batteries with substantially consistent performance are screened out, and the commercially available pouch batteries are connected in parallel to form groups and then are placed in the outer shell to manufacture the battery cell E4, wherein the specific process of this step is as follows:

hermetically mounting the sealing mechanism 7 on the first through hole 321 of the lower cover plate 32, sealing the first through hole 321, welding the lower cover plate 32 and the cylinder 33 (preferably, the welding manner is used for fixing), respectively connecting the positive and negative tabs of the plurality of commercially available pouch batteries with the positive and negative electrode columns of the upper cover plate 31, forming openings in the plurality of commercially available pouch batteries preferably in the environment having the dew point standard of -25°C to -40°C, the temperature of 23°C ± 2°C and the cleanliness of 100,000 levels, placing the plurality of commercially available pouch batteries which have been connected with the upper plate in the cylinder 33 with the lower cover plate 32 welded, and then fixedly connecting the upper cover plate 31 with the cylinder 33 (preferably, the welding manner is used for fixing), so as to form a battery cell E4.

Next, a plurality of battery cells E4 are connected in parallel to form a battery pack, and during the process of connecting the plurality of battery cells E4 in parallel to form the battery pack, the pipeline 322 on each of the battery cells D3 is spliced and communicated by the connecting pipe fitting 34 to form the main pipeline 10; and

then, the liquid injection vacuumizing mechanism and the plug are dismounted preferably in the environment having the dew point standard of -25°C to -40°C, the temperature of 23°C ± 2°C and the cleanliness of 100,000 levels, the traction portions 71 of all battery cells E4 are connected by using one traction wire rope, and the traction wire rope is pulled by an external force, so that openings are formed in the sealing portions of all battery cells E4 or the entirety is disengaged; and

afterwards, the plug and the liquid injection vacuumizing mechanism are remounted, a vacuumizing operation is performed on the battery pack, electrolyte is injected into the main pipeline, after liquid injection is completed, the liquid injection vacuumizing mechanism is dismounted, and the explosion venting valve is mounted. The electrolyte enters the battery cell E4, the electrolyte in the battery cells E4 realizes mutual communication by the openings in the pouch batteries, and the electrolyte in the main pipeline 10 communicates with the electrolyte in each of the battery cells E4, therefore all battery cells E4 are in a unified electrolyte sharing system, and thus completing the manufacturing of the high-capacity battery.

In other embodiments, the sealing mechanisms 7 on the battery cells E4 are ordinary sealing films, and the ordinary sealing films are punctured by using an operating rod provided with a plurality of puncture needles to form the openings in the battery cells E4. The distance between adjacent puncture needles is consistent with the distance between the ordinary sealing films on adjacent battery cells, and the specific process of forming the openings in the battery cells E4 by using the ordinary sealing films is as follows:
dismounting the liquid injection vacuumizing mechanism or the plug preferably in the environment having the dew point standard of -25°C to -40°C, the temperature of 23°C ± 2°C and the cleanliness of 100,000 levels, extending the operating rod into the main pipeline 10, ensuring that the puncture needles are aligned with the ordinary sealing films, and driving the puncture needles to move downwards, so that the openings are formed in the ordinary sealing films of all battery cells E4.

In the present embodiment, the step of connecting the battery cells E4 in parallel is able to be completed prior to electrolyte sharing, and is also able to be completed after electrolyte sharing.

Embodiment 5

The embodiment is a solution for implementing electrolyte sharing by using an electrolyte sharing pipeline system.

In the present embodiment, a high-capacity battery is manufactured by using battery cells F5; referring to Fig. 14, in the present embodiment, the battery cell F5 includes an outer shell and an electrode assembly; the electrode assembly is disposed in the outer shell, and electrolyte is contained in the outer shell;

referring to Figs. 14 to 16, the outer shell includes an upper cover plate 31, a lower cover plate 32, a cylinder body 33, and a sealing mechanism 7;

referring to Fig. 10, the lower cover plate 32 is provided with a first through hole 321, and is further provided with a pipeline 322 covering the first through hole and extending in a thickness direction of the battery cell F5, a second through hole 323 is formed in a side wall of the pipeline 322, and the first through hole 321 and the second through hole 323 communicate with each other. The first through hole 321 and the second through hole 323 are respectively circular or long-strip-shaped through holes.

The sealing mechanism 7 is disposed at the first through hole 321 or the second through hole 323.
The sealing mechanism 7 on the battery cell F5 is also the same as the sealing mechanism in Embodiment 2, and also has two forms.
In the present embodiment, the form of the main pipeline 10 is the same as that in Embodiment 3.
Referring to Fig. 15, the process of manufacturing the high-capacity battery by using the battery cells F5 with the sealing mechanisms in the first form and the electrolyte sharing pipeline system is as follows:

firstly, a plurality of battery cells F5 with substantially consistent performance are screened out;

next, the plurality of battery cells F5 are connected in parallel to form a battery pack, and during the process of connecting the plurality of battery cells F5 in parallel into the battery pack, the pipeline 322 on each of the battery cells F5 is spliced and communicated by the connecting pipe fitting 34 to form the main pipeline 10; and

then, the liquid injection vacuumizing mechanism and the plug are mounted, vacuumizing is first performed by the liquid injection vacuumizing mechanism, electrolyte is then injected into the main pipeline, after liquid injection is completed, the liquid injection vacuumizing mechanism is dismounted, and the explosion venting valve is mounted. The electrolyte dissolves the sealing film of each of the battery cells F5, so that the electrolyte enters the battery cell F5, the electrolyte in the main pipeline 10 communicates with the electrolyte in each of the battery cells F5, therefore all battery cells F5 are in a unified electrolyte sharing system, and thus completing the manufacturing of the high-capacity battery, as shown in Fig. 12.

Referring to Fig. 17, the process of manufacturing the high-capacity battery by using the battery cells F5 with the sealing mechanisms in the second form and the electrolyte sharing pipeline system is as follows:

firstly, a plurality of battery cells F5 with substantially consistent performance are screened out;

next, the plurality of battery cells F5 are connected in parallel to form a battery pack, and during the process of connecting the plurality of battery cells F5 in parallel into the battery pack, the pipeline 322 on each of the battery cells F5 is spliced and communicated by the connecting pipe fitting 34 to form the main pipeline 10; and then, the liquid injection vacuumizing mechanism and the plug are dismounted preferably in the environment having the dew point standard of -25°C to -40°C, the temperature of 23°C ± 2°C and the cleanliness of 100,000 levels, the traction portions 71 of all battery cells F5 are connected by using one traction wire rope, and the traction wire rope is pulled by an external force, so that openings are formed in the sealing portions of all battery cells F5 or the entirety is disengaged; and

afterwards, the liquid injection vacuumizing mechanism and the plug are remounted, a vacuumizing operation is first performed on the battery pack, electrolyte is then injected into the main pipeline, after liquid injection is completed, the liquid injection vacuumizing mechanism is dismounted, and the explosion venting valve is mounted. The electrolyte enters the battery cell F5, and the electrolyte in the main pipeline 10 communicates with the electrolyte in each of the battery cells F5, therefore all battery cells F5 are in a unified electrolyte sharing system, and thus completing the manufacturing of the high-capacity battery, as shown in Fig. 12.

In other embodiments, the sealing mechanisms on the battery cells F5 are ordinary sealing films, and the ordinary sealing films are punctured by using an operating rod provided with a plurality of puncture needles to form the openings in the battery cells F5. The distance between adjacent puncture needles is consistent with the distance between the ordinary sealing films on adjacent battery cells, and the specific process of forming the openings in the battery cells F5 by using the ordinary sealing films is as follows:

dismounting the liquid injection vacuumizing mechanism or the plug preferably in the environment having the dew point standard of -25°C to -40°C, the temperature of 23°C ± 2°C and the cleanliness of 100,000 levels, extending the operating rod into the main pipeline, ensuring that the puncture needles are aligned with the ordinary sealing films, and driving the puncture needles to move downwards, so that the openings are formed in the ordinary sealing films of all battery cells F5.

In the present embodiment, the step of connecting the battery cells F5 in parallel is able to be completed prior to electrolyte sharing, and is also able to be completed after electrolyte sharing.

Embodiment 6

The embodiment is a solution for implementing electrolyte sharing by using an electrolyte sharing pipeline system.

In the present embodiment, a high-capacity battery is manufactured by using battery cells G6, the battery cell G6 has a similar overall outline structure with a commercially available cylinder battery, specifically as shown in Fig. 18, the battery cell G6 includes an upper cover plate 31 and a cylinder 33, a connecting member 35 is disposed on the upper cover plate 31, a second through hole 323 is formed in the connecting member 35, a sealing mechanism 7 is disposed in the second through hole 323, and the sealing mechanism 7 on the battery cell G6 is also the same as the sealing mechanism in Embodiment 2, and also has two forms.

As shown in Fig. 18, in the present embodiment, the main pipeline 10 is a metal conductive pipe, one end of the main pipeline is a total liquid injection port 11, the other end is sealed, the sealing is preferably implemented by using a detachable plug, a plurality of first through holes 321 are formed in the main pipeline 10 along an axial direction of the main pipeline 10 itself, the battery cell G6 is able to be fixed with the first through holes 321 of the main pipeline 10 by the connecting member 35 of the battery cell G6 itself, and after the sealing mechanism is opened, the first through holes 321 communicate with the second through hole 323. The connecting member 35 is preferably fixed with the first through hole 321 via a threaded connection, and of course, bonding, riveting, or welding is also able to be used.

Referring to Fig. 18 and Fig. 19, the process of manufacturing the high-capacity battery by using the battery cells G6 with the sealing mechanisms in the first form and the electrolyte sharing pipeline system is as follows:

firstly, a plurality of battery cells G6 with substantially consistent performance are screened out, and the plurality of battery cells G6 are sequentially mounted on the main pipeline;

then, bottom surfaces of the cylinders of all battery cells G6 are fixedly connected by using one conductive connecting sheet 12, and the plurality of battery cells G6 are connected in parallel to form a battery pack; after the battery cells are connected in parallel to form the battery pack, the main pipeline 10 and the conductive connecting sheet 12 is able to be respectively used as positive and negative electrodes of the battery pack; and

finally, vacuumizing is first performed by the liquid injection vacuumizing mechanism at the total liquid injection port 11, electrolyte is then injected into the main pipeline, after liquid injection is completed, the liquid injection vacuumizing mechanism is dismounted, and the explosion venting valve is mounted. The sealing film is dissolved after encountering the electrolyte, the electrolyte enters the battery cell G6, and the electrolyte in the main pipeline 10 communicates with the electrolyte in each of the battery cells G6, therefore all battery cells G6 are in a unified electrolyte sharing system, and thus completing the manufacturing of the high-capacity battery.

Referring to Fig. 18 and Fig. 19, the process of manufacturing the high-capacity battery by using the battery cells G6 with the sealing mechanisms in the second form and the electrolyte sharing pipeline system is as follows:

firstly, a plurality of battery cells G6 with substantially consistent performance are screened out, and the plurality of battery cells G6 are sequentially mounted on the main pipeline 10;

then, the bottom surfaces of the cylinders of all battery cells G6 are fixedly connected by using one conductive connecting sheet 12, and the plurality of battery cells G6 are connected in parallel to form a battery pack; after the battery cells are connected in parallel to form the battery pack, the main pipeline 10 and the conductive connecting sheet 12 is able to be respectively used as the positive and negative electrodes of the battery pack;

next, the liquid injection vacuumizing mechanism and the plug are dismounted preferably in the environment having the dew point standard of -25°C to -40°C, the temperature of 23°C $\pm$ 2°C and the cleanliness of 100,000 levels, the traction portions 71 of the sealing mechanisms 7 on all battery cells G6 are connected by using one traction wire rope, and the traction wire rope is pulled by an external force, so that openings are formed in the sealing portions of all cylindrical battery cells G6 or the entirety is disengaged; and

finally, the liquid injection vacuumizing mechanism and the plug are remounted, vacuumizing is performed by the liquid injection vacuumizing mechanism, electrolyte is then injected into the main pipeline 10, after liquid injection is completed, the liquid injection vacuumizing mechanism is dismounted, and the explosion venting valve is mounted. The electrolyte enters the battery cell G6, and the electrolyte in the main pipeline 10 communicates with the electrolyte in each cylindrical battery cell G6, therefore all battery cells G6 are in a unified electrolyte sharing system, and thus completing the manufacturing of the high-capacity battery.

In other embodiments, the sealing mechanisms 7 on the battery cells G6 are ordinary sealing films, and the ordinary sealing films are punctured by using an operating rod provided with a plurality of puncture needles to form the openings in the battery cells G6. The distance between adjacent puncture needles is consistent with the distance between the ordinary sealing films on adjacent battery cells, and the specific process of forming the openings in the battery cells G6 by using the ordinary sealing films is as follows:
dismounting the liquid injection vacuumizing mechanism or the plug preferably in the environment having the dew point standard of -25°C to -40°C, the temperature of 23°C $\pm$ 2°C and the cleanliness of 100,000 levels, extending the operating rod into the main pipeline 10, ensuring that the puncture needles are aligned with the ordinary sealing films, and driving the puncture needles to move downwards, so that the openings are formed in the ordinary sealing films of all battery cells G6.
Of course, a push-out mechanism is also able to be disposed on the main pipeline 10, and the ordinary sealing film is also able to be directly pushed out when the battery cell G6 is mounted on the main pipeline 10, thereby forming the opening.
The conductive connecting sheet 12 is also able to be mounted after electrolyte sharing.
A first point should also be further emphasized is that, in the above Embodiments 2-6, when thermal runaway occurs in a certain battery cell, explosion venting is able to be realized after a generated flue gas passes through the main pipeline and the explosion venting valve. That is to say, the electrolyte sharing pipeline system is also able to be used as an explosion venting channel of the high-capacity battery, in this way, it is not necessary to additionally provide other explosion venting mechanisms on the high-capacity battery, thereby reducing the manufacturing cost of the high-capacity battery, and meanwhile ensuring the safety.
A second point should also be further emphasized is that, after the high-capacity battery is used for a period of time, the electrolyte is lost, the electrolyte sharing pipeline system is able to be used to pump out the old electrolyte from the high-capacity battery and inject new electrolyte, or directly supplement the new electrolyte into the high-capacity battery, thereby facilitating to prolong the service life of the high-capacity battery. In Embodiments 2-6, after the electrolyte sharing pipeline system is completed, the liquid injection vacuumizing mechanism is also able to be reserved on the high-capacity battery, and the plug is replaced with the explosion venting valve to facilitate subsequent liquid replacement and liquid supplementation.

A third point should also be further emphasized is that, by using the electrolyte sharing pipeline system, there is still a manner for implementing sharing without additionally injecting electrolyte into the battery pack. In short, the battery pack is formed by using commercially available pouch batteries or square batteries, then openings are formed in the commercially available pouch batteries or square batteries, the commercially available pouch batteries or square batteries are placed in the battery pack with the openings upwards, then the main pipeline is connected with the battery pack, the battery pack is rotated, so that the battery pack is placed in a posture with the opening facing downwards, the electrolyte in all commercially available pouch batteries or square batteries communicate with each other via the main pipeline after stewing for a period of time, so that all commercially available pouch batteries or square batteries are also able to be in the unified electrolyte sharing system. The premise of implementing the sharing in this manner is to ensure that the amount of the electrolyte in the commercially available pouch batteries or square batteries may meet the amount required for sharing.

A fourth point should also be further emphasized is that, the battery cells in Embodiment 3 and Embodiment 4 may also not use the upper cover plate, as long as the electrode columns of the commercially available square batteries or the tabs of the commercially available pouch batteries are able to be led out, and gaps at a rear upper part inside the cylinder 33 formed after the commercially available square batteries are mounted are sealed, or the gaps at the rear upper part inside the cylinder 33 formed after the commercially available pouch batteries are mounted are sealed, so as to ensure that the shared electrolyte is not in contact with the air.

Embodiment 7

The present embodiment is a solution for implementing electrolyte sharing in an immersion sharing manner, and the solution is applicable to all battery cells (that is, applicable to the battery cells A-G).

Since the manufacturing processes of the battery cells B-G are substantially consistent, the process of manufacturing a high-capacity battery is described below by taking the battery cells B1 as an example.

The process of manufacturing the high-capacity battery by using the battery cells B with the sealing mechanisms in the first form is as follows:

firstly, a plurality of battery cells B with substantially consistent performance are screened out, and the plurality of battery cells B1 are connected in parallel to form a battery pack;

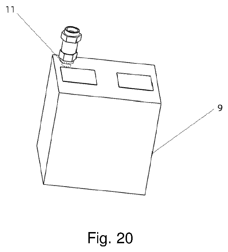

next, the positive and negative electrodes of the battery pack are connected with the positive and negative electrodes of a cover plate of the high-capacity battery, and meanwhile the cover plate is hermetically mounted on the high-capacity battery shell; and

then, electrolyte is directly injected into the high-capacity battery shell via the total liquid injection port 11 on the high-capacity battery shell 9, and after liquid injection is completed, the explosion venting valve is mounted. Under the action of the electrolyte, the sealing film on the battery cell B is dissolved, then the electrolyte enters each of the battery cells B, therefore the electrolyte in the high-capacity battery shell communicates with the electrolyte in each of the battery cells B, thereby ensuring that all battery cells B are in a unified electrolyte system, and thus completing the manufacturing of the high-capacity battery, as shown in Fig. 20.

The process of manufacturing the high-capacity battery by using the battery cells B with the sealing mechanisms in the second form is as follows:

firstly, a plurality of battery cells B with substantially consistent performance are screened out, and the plurality of battery cells B1 are connected in parallel to form a battery pack;

next, the positive and negative electrodes of the battery pack are connected with the positive and negative electrodes of the cover plate of the high-capacity battery, then the traction portions 71 of the sealing mechanisms 7 in all battery cells B are connected by using one traction wire rope, the battery pack is placed in the high-capacity battery shell 9, meanwhile the cover plate is hermetically mounted on the high-capacity battery shell, the traction wire rope extends out of the total liquid injection port 11, and the traction wire rope is pulled by an external force preferably in the environment having the dew point standard of -25°C to -40°C, the temperature of 23°C ± 2°C and the cleanliness of 100,000 levels, so that openings are formed in the sealing portions of all battery cells B or the entirety is disengaged; and

finally, electrolyte is directly injected into the high-capacity battery shell via the total liquid injection port 11 on the high-capacity battery shell 9, and after liquid injection is completed, the explosion venting valve is mounted. The electrolyte in the high-capacity battery shell 9 communicates with the electrolyte in each of the battery cells B, therefore all battery cells are in a unified electrolyte system, and thus completing the manufacturing of the high-capacity battery, as shown in Fig. 21.

In some embodiments, the commercially available pouch batteries or the commercially available square batteries (that is, the battery cells A) are also able to be directly used in the immersion sharing manner.

The specific process of manufacturing the high-capacity battery is described below by taking the commercially available pouch batteries as an example:

firstly, a plurality of commercially available pouch batteries with substantially consistent performance are screened out, and the plurality of commercially available pouch batteries are connected in parallel to form a battery pack;

next, an opening is formed in each commercially available pouch battery in the battery pack preferably in the environment having the dew point standard of -25°C to -40°C, the temperature of 23°C $\pm$ 2°C and the cleanliness of 100,000 levels, and then the battery pack is placed in a high-capacity battery shell 9, or after the battery pack is placed in the high-capacity battery shell, the opening is formed in each commercially available pouch battery;

then, the positive and negative electrodes of the battery pack are connected with the positive and negative electrodes of the cover plate of the high-capacity battery, and meanwhile the cover plate is hermetically mounted on the high-capacity battery shell; and

finally, electrolyte is directly injected into the high-capacity battery shell 9 via the total liquid injection port 11 on the high-capacity battery shell, and after liquid injection is completed, the explosion venting valve is mounted. The electrolyte in the high-capacity battery shell 9 communicates with the electrolyte in each commercially available pouch battery, thereby ensuring that all commercially available pouch batteries are in a unified electrolyte system, and thus completing the manufacturing of the high-capacity battery, as shown in Fig. 20.

Although the high-capacity battery formed by immersion sharing improves the dynamic uniformity of the electrolyte in the battery cells, the manner has a very high requirement for the own sealing property of the high-capacity battery shell, and thus the machining and manufacturing difficulty is relatively large; and since the use amount of the electrolyte is also relatively large when the electrolyte sharing system is established in this manner, the manufacturing cost of the high-capacity battery is also increased accordingly.

In addition, in the step S1, performing the capacity grading and sorting on the several battery cells has been conventional technical means in the art; however, in the present invention, in order to further reduce the original differences of the battery cells in the high-capacity battery, the step S1 is executed in the following capacity grading and sorting manner in the plurality of embodiments provided above, and the specific process is as follows:

S1.1, self-discharge screening: testing self-discharge current of the several battery cells to complete a first-time screening of the several battery cells; and

the specific flow of the self-discharge screening is as follows:

S1.1.1, placing a battery cell at a constant temperature of 25°C $\pm$ 5°C for 24 h, discharging the battery cell at constant current of 0.5 C (the 0.5 C is standard discharge current, and stopping until the battery cell is discharged to a voltage of 2.5 V (2.5 V is a discharge rated voltage);

S1.1.2, stewing the battery cell for 30 min;

S1.1.3, charging the battery cell at constant current of 0.5 C (the 0.5 C is standard charge current), when the battery cell is charged to a voltage of 3.65 V (the 3.65 V is a charge rated voltage), charging the battery cell at a constant voltage of 3.65 V to cutoff current 0.05 C, recording a charge capacity B1 of the battery cell at this time, wherein the capacity B1 is 100% SOC;

S1.1.4, stewing the battery cell for 30 min again;

S1.1.5, discharging the battery cell at the constant current of 0.5 C (the 0.5 C is the standard discharge current again, until the battery cell is discharged to the voltage of 2.5 V (2.5 V is the discharge rated voltage);

S1.1.6, stewing the battery cell for 30 min for the third time;

S1.1.7, charging the battery cell at the constant current of 0.5 C (the 0.5 C is the standard charge current), and when it is detected the capacity of the battery cell reaches 90%, stopping the process, wherein the capacity of the battery cell is 90% SOC at this time;

S1.1.8, charging the battery cell at 0.001 C (the 0.001 C is an initial set current threshold value), when the voltage of the battery cell rises or decreases during the charging process, adjusting the magnitude of the current threshold value according to a current step difference to continue to charge the battery cell, until the voltage of the battery cell is stable and unchanged, recording an adjusted current threshold value E at this time, and taking the current threshold value E as self-discharge current of the battery cell, wherein the value range of the current step difference is 0.0001 C to 0.0005 C;

S1.1.9, measuring the self-discharge current Ii of each of the several battery cells according to S1.1.1 to S1.1.8;

S1.1.10, calculating a self-discharge current average value:

$$\bar{I} = \frac{I1 + I2 + I3 + \ldots Ii \ldots + In}{n}$$ , wherein in the formula, n is the number of the several battery cells, and i∈n;

S1.1.11, calculating a deviation between the self-discharge current of each of the several battery cells and the self-discharge current average value:

$$\Delta I = \frac{Ii - \bar{I}}{\bar{I}}$$ ; and

S1.1.12, screening out battery cells meeting self-discharge requirements with the |ΔI| less than 5%, that is, the qualified battery cells after the first-time screening.

The |ΔI| is an absolute value of ΔI.
S1.2, internal resistance screening: performing an internal resistance test on the qualified battery cells after the first-time screening, to complete a second-time screening of the battery cells; and
a specific process of the internal resistance screening is:

S1.2.1, placing a battery cell of the qualified battery cells after the first-time screening at the constant temperature of 25°C ± 5°C for 24 h, discharging the battery cell at the constant current of 0.5 C, and stopping until the battery cell is discharged to the voltage of 2.5 V;

S1.2.2, stewing the battery cell for 30 min;

S1.2.3, charging the battery cell at the constant current of 0.5 C, when the battery cell is charged to the voltage of 3.65 V, charging the battery cell at the constant voltage of 3.65 V to the cutoff current 0.05 C, and recording the capacity B1 of the battery cell at this time, wherein the capacity B1 is 100% SOC;

S1.2.4, discharging the battery cell at the constant current of 0.5 C until the battery cell is discharged to 2.5 V;

S1.2.5, stewing the battery cell for 30 min again;

S1.2.6, charging the battery cell at the constant current of 0.5 C, and when it is detected that the capacity of a finished battery reaches 50% SOC, stopping the process;

S1.2.7, testing the internal resistance of the battery cell at this time by using an internal resistance tester, and recording the internal resistance Ri of the battery cell;

S1.2.8, calculating an internal resistance average value of the battery cell:

$$\bar{R} = \frac{R1 + R2 + R3 + \ldots Ri \ldots + Rn}{n}$$ , wherein in the formula, n is the number of the qualified battery cells after the first-time screening, and i∈n;

S1.2.9, calculating a deviation between the internal resistance of each of the qualified battery cells after the first-time screening and the internal resistance average value:

$$\Delta R = \frac{Ri - \bar{R}}{\bar{R}}$$ ; and

S1.2.10, screening out battery cells meeting internal resistance requirements with the |ΔR| less than 10%, that is, the qualified battery cells after the second-time screening.

The |ΔR| is an absolute value of ΔR.
S1.3, capacity screening: performing a capacity test on the qualified battery cells after the second-time screening, to complete a third-time screening of the battery cells, and finally obtaining battery cells meeting grouping requirements. The specific implementation is as follows:
The specific process of the capacity screening is:

S1.3.1, placing a battery cell of the qualified battery cells after the second-time screening at the constant temperature of 25°C ± 5°C for 24 h, discharging the battery cell at the constant current of 0.5 C, and stopping until the battery cell is discharged to the voltage of 2.5 V;
S1.3.2, stewing the battery cell for 30 min;
S1.3.3, charging the battery cell at the constant current of 0.5 C, when the battery cell is charged to the voltage of 3.65 V, charging the battery cell at the constant voltage of 3.65 V to the cutoff current 0.05 C, and recording the charge capacity Qi of the battery cell;
S1.3.4, calculating a capacity average value of the battery cell: $$\bar{Q} = \frac{Q1 + Q2 + Q3 + \ldots Qi \ldots + Qn}{n}$$ ,

wherein in the formula, n is the number of the qualified battery cells after the second-time screening, and i≤n;

S1.3.5, calculating a deviation between the capacity of each of the battery cells and the capacity average

value: $\Delta Q = \dfrac{Qi - \overline{Q}}{\overline{Q}}$ ; and

S1.3.6, selecting battery cells meeting capacity requirements with the |ΔQ| less than 1%, that is, the battery cells meeting grouping requirements.

The |ΔQ| is an absolute value of ΔQ .

It can be understood that the three screening manners are independent of each other, and the screening sequences thereof may be adjusted according to use requirements.

Of course, the above battery cell screening method is an optimal solution, and any one or combinations of any two of self-discharge screening, capacity screening and internal resistance screening may also be selected according to actual conditions for screening.

It should be understood that the terms such as "have", "contain" and "include" as used herein do not match the presence or addition of one or more other elements or combinations thereof.

The terms "first", "second", and the like in the specification and claims of the embodiments of the present invention are used for distinguishing different objects, rather than describing a specific sequence of the objects. For example, a first clamping block and a second clamping block are used for distinguishing different clamping blocks, rather than describing a specific sequence of the clamping blocks.

In the description of the embodiments of the present invention, unless otherwise specified, "a plurality of" means two or more. For example, a plurality of elements refer to two elements or more than two elements.

In the embodiments of the present invention, words such as "exemplary" or "for example" are used for representing examples, illustrations or descriptions. Any embodiment or design solution described as "exemplary" or "for example" in the embodiments of the present invention should not be explained as being more preferred or having more advantages than other embodiments or design solutions. Exactly, the words such as "exemplary" or "for example" are used for presenting related concepts in a specific manner.

Although the implementation solutions of the present invention have been disclosed as above, they are not limited to the applications listed in the specification and implementations. The implementation solutions may be completely applicable to various fields suitable for the present invention. Those skilled in the art who are familiar with this art may easily implement additional modifications. Therefore, the present invention is not limited to the specific details and the illustrations shown and described herein without departing from general concepts defined by the claims and equivalent scopes thereof.

**Claims**

1.  A manufacturing process of a high-capacity battery, wherein the manufacturing process comprises following steps:

    S1, performing capacity grading and sorting on several battery cells;
    S2, grouping: forming at least one battery pack by a plurality of battery cells of the several battery cells selected in the S1 and meeting requirements; and
    S3, battery packaging: first connecting battery cells in each of the at least one battery pack in parallel, then locating all of the battery cells in each of the at least one battery pack in an electrolyte system, and thus completing a manufacturing of the high-capacity battery;
    or,
    first locating all of the battery cells in each of the at least one battery pack in an electrolyte system, then connecting the battery cells in each of the at least one battery pack in parallel, and thus completing the manufacturing of the high-capacity battery.

2.  The manufacturing process of the high-capacity battery as claimed in claim 1, wherein the manufacturing process of the high-capacity battery further comprises: S4: performing low-current charging and discharging on the high-capacity battery in the S3 to complete a formation of the high-capacity battery.

3.  The manufacturing process of the high-capacity battery as claimed in claim 2, wherein the manufacturing process of the high-capacity battery further comprises: S5: performing an aging treatment on the high-capacity battery.

4.  The manufacturing process of the high-capacity battery as claimed in claim 2 or 3, wherein the manufacturing process of the high-capacity battery further comprises: after the formation or the aging treatment, performing an exhaust treatment on an electrolyte cavity of the high-capacity battery.

5.  The manufacturing process of the high-capacity battery as claimed in claim 1, wherein in the S3, a vacuumizing treatment is performed before all of the battery cells in each of the at least one battery pack are located in the electrolyte system.

6.  The manufacturing process of the high-capacity battery as claimed in claim 1, wherein in the S3, all of the battery cells in each of the at least one battery pack are located in the electrolyte system by using an electrolyte sharing package.

7. The manufacturing process of the high-capacity battery as claimed in claim 1, wherein in the S3, all of the battery cells in each of the at least one battery pack are located in the electrolyte system by using an electrolyte sharing pipeline system, and meanwhile the electrolyte sharing pipeline system is able to be used as an explosion venting channel.

8. The manufacturing process of the high-capacity battery as claimed in claim 6, wherein the electrolyte sharing pipeline system comprises a main pipeline; and each of the battery cells communicates with the main pipeline via a channel of each of the battery cells respectively.

9. The manufacturing process of the high-capacity battery as claimed in claim 6, wherein the electrolyte sharing pipeline system comprises a main pipeline; the main pipeline is connected with each of the battery cells, a sealing mechanism is disposed at a position where each of the battery cells is connected with the main pipeline, and the sealing mechanism is dissolved when encountering electrolyte, or is opened under an action of an external force, so that each of the battery cells communicates with the main pipeline.

10. The manufacturing process of the high-capacity battery as claimed in claim 9, wherein the sealing mechanism is a sealing film dissoluble in the electrolyte.

11. The manufacturing process of the high-capacity battery as claimed in claim 9, wherein the sealing mechanism comprises a sealing portion and a traction portion;

   the sealing portion is disposed on a shell of each of the battery cells;
   the traction portion is connected to a side surface of the sealing portion that is away from an electrolyte cavity in each of the battery cell; and when the traction portion is subjected to a traction of an external force, the sealing portion is integrally disengaged, or an opening is formed in the sealing portion.

12. The manufacturing process of the high-capacity battery as claimed in claim 11, wherein a circle of nicks is disposed on the sealing portion, a region defined by the circle of nicks is a weak region, and the traction portion is disposed on the weak region; and when the traction portion is subjected to the traction of the external force, the weak region is torn along the circle of nicks to form the opening.

13. The manufacturing process of the high-capacity battery as claimed in claim 1, wherein in the S3, all of the battery cells in each of the at least one battery pack are located in an electrolyte system by soaked in a box body containing electrolyte.

14. The manufacturing process of the high-capacity battery as claimed in any of claims 1-13, wherein in the S1, the capacity grading and sorting on the several battery cells are implemented by one or more combinations of self-discharge screening, internal resistance screening or capacity screening.

15. The manufacturing process of the high-capacity battery as claimed in any of claims 1-13, wherein a specific method for performing capacity grading and sorting on the several battery cells in the S1 comprises:

   S1.1, self-discharge screening: testing self-discharge current of the several battery cells to complete a first-time screening of the several battery cells;
   S1.2, internal resistance screening: performing an internal resistance test on qualified battery cells after the first-time screening, to complete a second-time screening of the qualified battery cells after the first-time screening; and
   S1.3, capacity screening: performing a capacity test on qualified battery cells after the second-time screening, to complete a third-time screening of the qualified battery cells after the second-time screening, and finally obtaining battery cells meeting grouping requirements.

16. The manufacturing process of the high-capacity battery as claimed in claim 15, wherein the self-discharge screening in the S1.1 comprises the following steps:

   S1.1.1, acquiring 100% SOC of a battery cell of the several battery cells;
   S1.1.2, charging and discharging the battery cell of the several battery cells, so that a capacity of the battery cell of the several battery cells reaches 90% SOC;
   S1.1.3, setting a current threshold value to charge the battery cell of the several battery cells, when a voltage of the battery cell of the several battery cells rises or decreases during a charging process, adjusting a magnitude of the current threshold value as claimed in a current step difference to continue to charge the battery cell of the several battery cells until the voltage of the battery cell of the several battery cells is stable and unchanged, recording an adjusted current threshold value E, and taking the adjusted current threshold value E as a self-discharge current I of the battery cell of the several battery cells, wherein a value range of the current step difference is 0.0001 C to 0.0005 C;

S1.1.4, acquiring a self-discharge current Ii of each of the several battery cells as claimed in the S1.1.1 to the S1.1.3;

S1.1.5, calculating a self-discharge current average value:

$$\bar{I} = \frac{I1 + I2 + I3 + \ldots Ii \ldots + In}{n}$$ , wherein the n is the number of the several battery cells, and $i \in n$;

S1.1.6, calculating a deviation between the self-discharge current of each of the several battery cells and the self-discharge current average value:

$$\Delta I = \frac{Ii - \bar{I}}{\bar{I}} ;$$

and

S1.1.7, screening out battery cells meeting self-discharge requirements with the $|\Delta I|$ less than 5%, that is, the qualified battery cells after the first-time screening.

17. The manufacturing process of the high-capacity battery as claimed in claim 15, wherein the internal resistance screening in the S1.2 comprises following steps:

S1.2.1, acquiring 100% SOC of a battery cell of the qualified battery cells after the first-time screening;

S1.2.2, charging and discharging the battery cell of the qualified battery cells after the first-time screening, so that a capacity of the battery cell of the qualified battery cells after the first-time screening reaches a set SOC, and measuring an internal resistance of the battery cell of the qualified battery cells after the first-time screening at this time, wherein the set SOC is 20% SOC to 90% SOC;

S1.2.3, acquiring an internal resistance Ri of each of the qualified battery cells after the first-time screening as claimed in the S1.2.1 to the S1.2.2;

S1.2.4, calculating an internal resistance average value of the qualified battery cells after the first-time screening:

$$\bar{R} = \frac{R1 + R2 + R3 + \ldots Ri \ldots + Rn}{n}$$ , wherein

the n is the number of the qualified battery cells after the first-time screening, and $i \in n$;

S1.2.5, calculating a deviation between the internal resistance of each of the qualified battery cells after the first-time screening and the internal resistance average value: $\Delta R = \dfrac{Ri - \bar{R}}{\bar{R}}$ ;

and

S1.2.6, screening out battery cells meeting internal resistance requirements with the $|\Delta R|$ less than 10%, that is, the qualified battery cells after the second-time screening.

18. The manufacturing process of the high-capacity battery as claimed in claim 15, wherein the capacity screening in the S1.3 comprises following steps:

S1.3.1, acquiring a capacity Q of a battery cell of the qualified battery cells after the second-time screening;

performing constant current discharging on the battery cell of the qualified battery cells after the second-time screening as claimed in standard discharge current to discharge the battery cell of the qualified battery cells after the second-time screening to a discharge rated voltage;

performing constant current charging on the battery cell of the qualified battery cells after the second-time screening as claimed in standard charge current, when the battery cell of the qualified battery cells after the second-time screening is charged to a charge rated voltage, charging the battery cell of the qualified battery cells after the second-time screening at the charge rated voltage to cut-off current, and recording the capacity Q of the battery cell of the qualified battery cells after the second-time screening at this time;

S1.3.2, acquiring a capacity Qi of each of the qualified battery cells after the second-time screening as claimed in the S1.3.1;

S1.3.3, calculating a capacity average value of the qualified battery cells after the second-time screening:

$$\bar{Q} = \frac{Q1 + Q2 + Q3 + \ldots Qi \ldots + Qn}{n}$$ , wherein

the n is the number of the qualified battery cells after the second-time screening, and $i \in n$;

S1.3.4, calculating a deviation between the capacity of each of the qualified battery cells after the second-time screening and the capacity

average value: $\Delta Q = \dfrac{Qi - \bar{Q}}{\bar{Q}}$ ; and

S1.3.5, screening out battery cells meeting capacity requirements with the $|\Delta Q|$ less than 1%, that is, the battery cells meeting grouping requirements.

EP 4 629 375 A1

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

## INTERNATIONAL SEARCH REPORT

| | International application No. |
|---|---|
| | **PCT/CN2023/140132** |

| A. | CLASSIFICATION OF SUBJECT MATTER |
|---|---|

H01M10/052(2010.01)i;  H01M10/058(2010.01)i;  B07C5/344(2006.01)i

According to International Patent Classification (IPC) or to both national classification and IPC

| B. | FIELDS SEARCHED |
|---|---|

Minimum documentation searched (classification system followed by classification symbols)

IPC:  H01M10/-,  B07C5/-

Documentation searched other than minimum documentation to the extent that such documents are included in the fields searched

Electronic data base consulted during the international search (name of data base and, where practicable, search terms used)

CNTXT, ENTXTC, CNKI, ISI_WEB OF SCIENCE: 大容量, 电池, 分容, 分选, 筛选, 一致性, 均匀性, 电解液, 共享, large, capacity, battery, separation, electrolyte, sort+, grad+, share, uniform+, consisten+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115275453 A (SHAANXI AOLIN BOSI ELECTRIC POWER ENERGY CO., LTD.) 01 November 2022 (2022-11-01)<br>description, paragraphs [0006]-[0024] | 1-18 |
| X | CN 114497673 A (SHAANXI AOLIN BOSI ELECTRIC POWER ENERGY CO., LTD.) 13 May 2022 (2022-05-13)<br>description, paragraphs [0005]-[0018] | 1-18 |
| X | CN 217114564 U (SHAANXI AOLIN BOSI ELECTRIC POWER ENERGY CO., LTD.) 02 August 2022 (2022-08-02)<br>description, paragraphs [0007]-[0048] | 1-18 |
| X | CN 216872055 U (SHAANXI AOLIN BOSI ELECTRIC POWER ENERGY CO., LTD.) 01 July 2022 (2022-07-01)<br>description, paragraphs [0005]-[0018] | 1-18 |
| PX | CN 116960436 A (SHAANXI AOLIN BOSI ELECTRIC POWER ENERGY CO., LTD.) 27 October 2023 (2023-10-27)<br>claims 1-14 | 1-18 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 March 2024** | **20 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| :-- |
| **PCT/CN2023/140132** |

### C.    DOCUMENTS CONSIDERED TO BE RELEVANT

| Category* | Citation of document, with indication, where appropriate, of the relevant passages | Relevant to claim No. |
| :-- | :-- | :-- |
| PX | CN 218957857 U (SHAANXI AOLIN BOSI ELECTRIC POWER ENERGY CO., LTD.) 02 May 2023 (2023-05-02) <br>    description, paragraphs [0004]-[0050] | 1-18 |
| PX | WO 2023029851 A1 (SHAANXI OLYMPUS POWER ENERGY CO., LTD.) 09 March 2023 (2023-03-09) <br>    description, embodiment 1 | 1-18 |
| A | KR 20130102964 A (MEGABESS INC. et al.) 23 September 2013 (2013-09-23) <br>    description, embodiment 1 | 1-18 |
| A | CN 115360484 A (SHAANXI AOLIN BOSI ELECTRIC POWER ENERGY CO., LTD.) 18 November 2022 (2022-11-18) <br>    description, embodiment 1 | 1-18 |

Form PCT/ISA/210 (second sheet) (July 2022)

| INTERNATIONAL SEARCH REPORT | | International application No. |
|---|---|---|
| Information on patent family members | | **PCT/CN2023/140132** |

| Patent document cited in search report | | | Publication date (day/month/year) | Patent family member(s) | | | Publication date (day/month/year) |
|---|---|---|---|---|---|---|---|
| CN | 115275453 | A | 01 November 2022 | None | | | |
| CN | 114497673 | A | 13 May 2022 | None | | | |
| CN | 217114564 | U | 02 August 2022 | None | | | |
| CN | 216872055 | U | 01 July 2022 | None | | | |
| CN | 116960436 | A | 27 October 2023 | None | | | |
| CN | 218957857 | U | 02 May 2023 | None | | | |
| WO | 2023029851 | A1 | 09 March 2023 | None | | | |
| KR | 20130102964 | A | 23 September 2013 | KR | 101337436 | B1 | 05 December 2013 |
| CN | 115360484 | A | 18 November 2022 | None | | | |

Form PCT/ISA/210 (patent family annex) (July 2022)